Europäisches Patentamt

European Patent Office

Office européen des brevets

Publication number: **0 362 149**
**A2**

# EUROPEAN PATENT APPLICATION

Application number: 89830342.5

Int. Cl.⁵ **B60N 2/44 , A47C 31/11**

Date of filing: 24.07.89

Priority: **21.09.88 IT 3591488 U**

Date of publication of application:
**04.04.90 Bulletin 90/14**

Designated Contracting States:
**AT BE CH DE ES FR GB GR LI LU NL SE**

Applicant: **Barattini, Anna**
**Via S. Maria in Monticelli 64**
**Rome(IT)**

Applicant: **Rossi, Anna Maria**
**Via Filippo Marchetti 35**
**I-00199 Rome(IT)**

Inventor: **Barattini, Anna**
**Via S. Maria in Monticelli 64**
**Rome(IT)**
Inventor: **Rossi, Anna Maria**
**Via Filippo Marchetti 35**
**I-00199 Rome(IT)**

Representative: **de Simone, Domenico et al**
**Ing. Barzanò & Zanardo Roma S.p.A. Via**
**Piemonte 26**
**I-00187 Roma(IT)**

## Elastic foldable covers for motorcar seats.

Covers (1) for motorcar seats of an elastic material, with a shape adaptable to any seat type, endowed at the lower interior part with a set of members for tightening the cover (1) itself and foldable so as to be housed and conveyed in a small size pocket envelope(14).

FIG. 4

EP 0 362 149 A2

# ELASTIC FOLDABLE COVERS FOR MOTORCAR SEATS

The present invention relates to elastic foldable covers for motorcar seats.

More particularly, this invention relates to a set of cover members for all motorcar seats, which cover members are suitable for being readily put on these independently of the seat type or size.

As is well known, there is the need for covering the seat of one's own motorcar with unfixed covers, particularly in hot seasons, during which one enters his own motorcar with wet garments; in case of conveyance of children, animals, cumbersome and unclean articles; whenever the material or the colour of the seats of one's own motorcar exhibits disagreeable characteristics for the user himself.

In order to solve this kind of problems, at the present day covers are commercially available, manufactured from materials which are very different, but gen-erally characterzed by considerable weight and stiffness, of different sizes according to the seat type on which they must be put, often manufactured of fabrics with quite neutral and banal tonalities.

Such cover members need, in most cases, a quite long assembly time, as the seat shape and the seams of the cover itself need to be fitted each other by successive movements.

Also, exactly because of the particularity of the material and of the fact that the covers commercially available at present, if not purposedly made, are never completely tightened, the covers create a problem for the user while travelling.

In addition, one of the major disadvantages with the motorcar seats at present known, is in the fact that the covers, once taken off, are considerably cumbersome, what make it difficult both for the retailer and for the user to stock them; therefore the retailers limit themselves to supply only sample-books of fabrics and thus to supply the manufactured article successively.

It is therefore evident the need for providing motorcar seat cover members adaptable to any type of seat, which may be readily put on and taken off, endowed with a fastening system which is independent of the seat shape.

In order to fulfil that need it is suggested according to the present invention of manufacturing motorcar seat covers of an elastic material, whose shape is adaptable to the shape of any seat type, endowed in the lower interior part with a set of members for tightening the cover itself, and foldable so as to be able to be housed and conveyed in a small size pocket envelope, which, when filled, may also be used as a cushion for the motorcar passengers, while when it is empty, it may be easily utilized for containing articles of various kinds, useful during the journey.

It is therefore a specific object of the present invention a cover member for covering motorcar seats, comprising a back portion, a cushion portion and a bottom portion, characterized in that said back portion comprises a front portion and a rear portion of the same lenght, said front portion and said rear portion are connected by a longitudinal continuous seam, in that a second transverse continuous seam is provided in a position close to the lower extremity of said front portion of the back member, for connecting with said cushion portion, in which said cushion portion shows a transverse continuous seam at the edge for connecting with a lower portion and in which said bottom portion shows an edge member which is connected with the extremity edge of the rear part of said back portion in which at said edge member first elastic means are provided, in which second elastic means are provided close to the interior part of said seat member transverse seam, in which said first and said second elastic means are connected to each other by hook members.

Advantageously, still according to the present invention, said cover members are intended to cover front and rear seats.

Also, still according to this invention, said cover members are endowed with a pocket containment envelope for being conveyed and housed.

The present invention will be now disclosed just for illustrative and not for limitative purposes, with reference to the accompanying drawings, wherein:

Figure 1 shows a rear view of a cover taken off in accordance with the present invention;

Figure 2 shows a schematic side view of a motorcar seat with a cover being taken off and fastened;

Figure 3 shows a detail view of the hooking part of the covers according to the present invention;

Figure 4 shows a perspective view of a front motorcar seat with a cover arranged according to the present invention;

Figure 5 shows a perspective view of a pocket envelope for the covers in an open position; and

Figure 6 shows the same pocket envelope in a closed position.

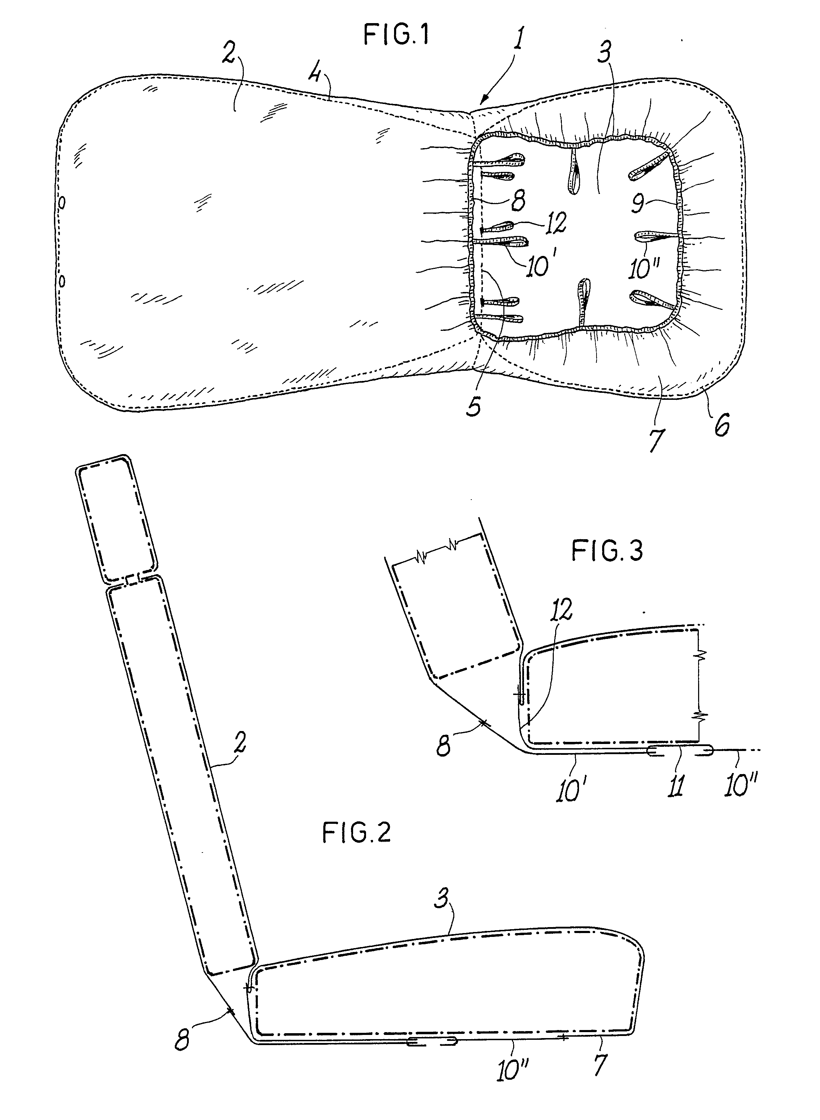

As can be observed in Figure 1, a cover member 1 is represented, which is intended to cover one of the two motorcar front seats.

Such a member shows a back portion 2 and a cushion portion 3, respectively intended to be fitted to the back and to the cushion of the motorcar seat. ·

It can be remarked that the back portion essentially consists of an envelope member showing only one continuous seam 4, which extends along the sides of the member.

That contrivance, associated with the particular elastic characteristics of the material which member 1 preferably is made of, allows the cover to be fitted to any seat type, independently of the shape or the thickness of the cover, simply by putting on portion 2 from the top at the seat top.

The bottom part of portion 2 is associated with the cushion portion 3 by the continuous seam 5.

Likewise, the cushion portion 3 shows a continuous seam 6, which is so arranged as to be concealed under the peripheral edge of the cushion portion.

It is provided a further portion 7 associated to that cushion portion 3 at the seam 6, which covers the bottom part of the cushion portion of the seat and which connects with the peripheral lower edge 8 of the rear part of the back portion 2.

The edge 8, as well as the edge 9 of the portion 7 are connected and fastened by an elastic tape to which a set of elastic rings 10' and 10" are fastened.

As can be observed in Figures 2 and 3, for fastening the cover in place it will be sufficient to connect the elastics 10' and 10" respectively provided on the edges 8 and 9 of the portions 2 and 7 by a hook member schematically illustrated in Figure 3.

In addition, in order to ensure that the back portion 2 is well fitted to the seat, the elastics 12 provided along the continuous seam 5 are connected by the same hook 11 which connects the elastics 10' and 10".

In this way, the user is allowed to fit and tighten the back portion from the interior of the cover, what makes it easier the cover to be put on.

It can be remarked that a further headrest cover member 13 is also provided, also made so as to be firmly holded and adaptable to any shape.

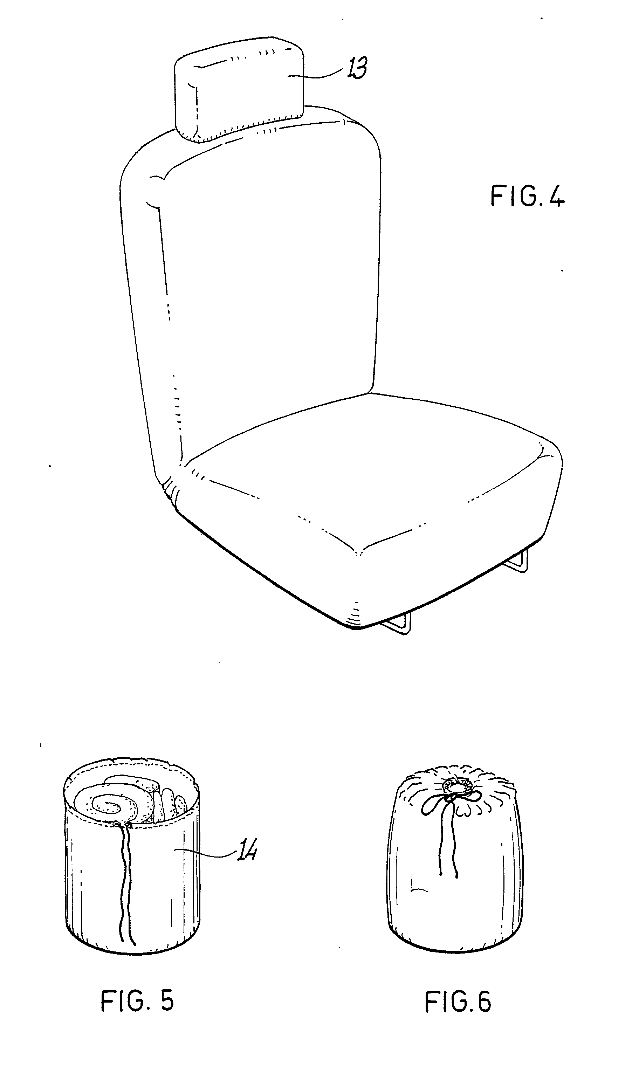

In Figures 5 and 6 a pocket envelope 14 is illustrated in an open configuration and in a closed configuration, which pocket envelope in a preferred embodiment consists of the same material as the covers; this pocket envelope holds all cover set members intended to cover front and rear motorcar seats as well as the headrest.

It should be noted that such an envelope has an extremely reduced size, so it is easily conveyed and housed in the motorcar trunk rack.

In addition, in a preferred embodiment the afore-said covers are manufactured of elastic and fancy coloured fabrics.

The present invention has been disclosed just for illustrative and not for limitative purposes according to some preferred embodiments of the same, but it is to be understood that changes and·or modifications can be introduced in the invention by those who are skilled in the art without departing from the protection scope of the same.

## Claims

1. Cover members for covering motorcar seats comprising a back portion, a cushion portion and 2 bottom portion, characterized in that said back portion (2) comprises a front portion and a rear portion of the same lenght, said front portion and said rear portion are connected by a longitudinal continuous seam(6) in that a second continuous transverse seam is provided close to the lower extremity of said back member front portion for connecting with said cushion portion, in which said cushion portion has a transverse continuous seam at the edge, for connecting with a lower portion and in which said bottom portion has an edge member which connects with the extremity edge of the rear portion of said back portion and in which at said edge member first elastic fastening means are provided, in which second elastic means are provided close to the interior of said seat member transverse seam, in which said first and said second elastic means are connected by hook members.

2. Cover members according to Claim 1, characterized in that they are holded in a containment pocket envelope for conveying and holding the same.

FIG.1

FIG.3

FIG.2

FIG. 4

*13*

FIG. 5

*14*

FIG.6